# NEUE EUROPÄISCHE PATENTSCHRIFT

(11) **EP 0 555 759 B2**
(45) Veröffentlichungstag und Bekanntmachung des Hinweises auf die Entscheidung über den Einspruch: **09.08.2000**
(45) Hinweis auf die Patenterteilung: 18.09.1996
(21) Anmeldenummer: 93101678.6
(22) Anmeldetag: 04.02.1993
(51) Int. Cl.: G01G 21/23, G01G 11/00, G01G 13/00, G01F 1/78

(54) **Massestrommesseinrichtung**
Mass flow measuring device
Débimètre massique

(30) Priorität: 09.02.1992 DE 4203739
(43) Veröffentlichungstag der Anmeldung: 18.08.1993
(73) Patentinhaber: CONPRO GmbH, D-32602 Vlotho (DE)
(72) Erfinder: Wölfl, Volkmar, W-4973 Vlotho-Valdorf (DE)
(74) Vertreter: Müller, Karl-Ernst, Dr., Dipl.-Ing.

(56) Entgegenhaltungen:
- EP-A- 0 144 232
- DE-A- 3 914 925
- PATENT ABSTRACTS OF JAPAN vol. 6, no. 38 (P-105)(916) 9. März 1982 ; & JP-A-56 155 412
- Datenblatt D 21.29.0 "Plattform-Wägezellen PW" HBM Darmstadt (DE) 12-88

## Beschreibung

Die Erfindung betrifft eine Massestrommeßeinrichtung für pulverförmige und/oder granulatförmige Rohstoffe in der Form einer Trichterwaage mit einem Wägetrichter, einem Materialeinlauf und einem Materialauslauf, wobei der Wägetrichter eine Wägezelle beaufschlagt, und mit einer Einrichtung zur Bestimmung des durch den Wägetrichter fließenden Massestromes durch Ermittlung der Gewichtskraft.

Bei einer durch Benutzung bekanntgewordenen Massestrommeßeinrichtung ist der Wägetrichter an seinem oberen Einlaufbereich mit zwei einander gegenüberliegenden und seitlich abstehenden Winkelstücken versehen, die jeweils auf der Wägeplattform einer zugeordneten, an sich bekannten Wägezelle aufliegen, so daß an diesen beiden Stellen die Messung der Gewichtskraft des durch den Wägetrichter fließenden Massestroms erfolgt. Daraus ergibt sich das Problem, daß der Schwerpunkt des Wägetrichters mit der zu bestimmenden Rohstoffmasse unterhalb der Wägeplattform beziehungsweise der zugeordneten Wägezellen angeordnet ist, so daß bei Unregelmäßigkeiten der Befüllung des Wägetrichters und einer damit verbundenen Verlagerung des Schwerpunktes eine Korrektur der gemessenen Gewichtskraft erforderlich ist. Außerdem ist eine Umrechnung der gemessenen Werte unter Berücksichtigung von zwei angeordneten Wägezellen erforderlich. Weiterhin bedarf die bekannte Massestrommeßeinrichtung bei ungleichmäßiger Beaufschlagung einer Beruhigung, wobei die während der Beruhigungsphase erfaßten Meßwerte mit entsprechenden Ungenauigkeiten behaftet sind. Es kommt hinzu, daß ein Auswechseln des Wägetrichters, beispielsweise im Rahmen einer Reinigung, aufwendig ist, weil beim erneuten Einsetzen des Wägetrichters die Winkelstücke auf den Plattformen der beiden zugeordneten Wägezellen eingerichtet und justiert werden müssen.

Eine Massestrommeßeinrichtung anderer Bauart mit einem unterschiedlichen Wägeprinzip ist in der DE-A-38 10 710 beschrieben, bei der bekannten Massestrommeßeinrichtung ist unterhalb der Vorrichtung ein Wägestab mit darauf befindlichen Dehnungsmeßstreifen angeordnet, auf dem die Massestrommeßeinrichtung mit ihrem Schwerpunkt auflagert. Bei der aus der DE-A-38 10 710 bekannten Massestrommeßeinrichtung wird im Gegensatz zur gattungsgemäßen Massestrommeßeinrichtung der Massestrom nicht erfaßt, sondern über die als Bestandteil der bekannten Massestrommeßeinrichtung arbeitende Förderschnecke vorgegeben beziehungsweise dosiert. Eine derartige Ausbildung der Wägezelle beziehungsweise Meßzelle ist bei der gattungsgemäßen Massestrommeßeinrichtung jedoch nicht möglich, da die mittig anzuordnende Meßzelle in den zu erfassenden Massestrom hineinreichen würde

In der EP 0 144 232 ist eine für den diskontinuierlichen Betrieb vorgesehene Verwiegeeinrichtung beschrieben, bei welcher eine Wägezelle in einem exzentrisch zum Wägetrichter angeordneten geschlossenen Gehäuse untergebracht ist. Der feststehende Teil der Wägezelle ist fest mit einem zugeordneten Gehäuseteil verbunden, während der lastseitige Teil der Wägezelle mittels einer aus mehreren Teilen zusammengesetzten Einheit an eine den Wägetrichter haltende Plattform angeschlossen ist. Die bekannte Verwiegeeinrichtung will dabei mittels der in geeigneter Weise zusammengesetzten Verbindung zwischen Plattform und Wägezelle die eine Verfälschung der von der Wägezelle abgegriffenen Meßwerte bewirkenden Auswirkungen einerseits einer Geräuschübertragung und andererseits einer elektrostatischen Aufladung des Wägetrichters vermeiden. Der dazu herangezogene Aufbau der Übertragungseinheit hat einen komplizierten Aufbau der bekannten Verwiegeeinrichtung zur Folge.

Der Erfindung liegt daher die Aufgabe zugrunde, bei einer gattungsgemäßen Massestrommeßeinrichtung die Genauigkeit der Erfassung des durch den Wägetrichter fließenden Massestromes zu verbessern und dabei die gattungsgemäße Massestrommeßeinrichtung derart weiterzubilden, daß bei einem einfachen konstruktiven Aufbau einzelne Teile der Massestrommeßeinrichtung, insbesondere der Wägetrichter, leicht ausgewechselt und ohne Notwendigkeit eines Nachjustierens der Massestrommeßeinrichtung wieder zusammengesetzt werden können.

Die Lösung dieser Aufgabe ergibt sich einschließlich vorteilhafter Ausgestaltungen und Weiterbildungen der Erfindung aus dem Anspruch 1; vorteilhafte Ausgestaltungen und Weiterbildungen der Erfindung sind in den Unteransprüchen angegeben.

Die Erfindung sieht in ihrem Grundgedanken vor, daß der Wägetrichter mit seinem unteren Ende auf einer Wägeplattform der als Plattform-Wägezelle bekannter Bauart ausgebildeten Wägezelle aufsteht und die Wägeplattform einen exzentrisch angeordneten L-förmigen Ansatz aufweist und eine gehäusefeste Grundplatte mit einem zugeordneten L-förmigen Teil versehen ist, wobei die jeweiligen L-Schenkel zur Bildung eines nahezu geschlossenen Aufnahmeraumes für die Plattform-Wägezelle ineinandergreifen und das an den L-Schenkeln von Wägeplattform und Grundplatte innenseitig Nuten zum formschlüssigen Festlegen der Wägezelle ausgebildet sind. Mit der Erfindung ist der Vorteil verbunden, daß aufgrund der L-förmigen Gestaltung von Teilen der Wägeplattform und der Grundplatte in einfacher Weise ein geschlossener Raum zur geschützten Aufnahme der Wägezelle ausgebildet ist. Soweit innenseitig an den L-Schenkeln von Wägeplattform und Grundplatte Nuten zum formschlüssigen Festlegen der Plattform-Wägezelle ausgebildet sind, wird in vorteilhafter Weise verhindert, daß bei dem Zusammenbau bzw. bei der Justierung der Plattform-Wägezelle diese sich in dem Aufnahmeraum verschiebt, womit eine Verfälschung der Meßergebnisse verbunden wäre.

Eine Plattform-Wagezelle der verwendeten Art ist beispielsweise in dem Firmenprospekt "Plattform-Wägezellen PW" der Firma Hottinger Baldwin Meßtechnik GmbH (Datenblatt D 21.29.0) beschrieben.

Nach einem bevorzugten Ausführungsbeispiel weist die Wägeplattform einen den Wägetrichter um ihre Durchflußöffnung zentrierenden Aufnahmering auf, wobei der Wägetrichter vorzugsweise mittels Schnellverschlüssen an der Wägeplattform beziehungsweise dem Aufnahmering befestigbar ist. Bei dieser Ausführungsform ist das Auswechseln des Wägetrichters außerordentlich erleichtert, weil der Wägetrichter nach Lösen der Schnellverschlüsse von der Wägeplattform abgenommen werden kann beim Aufsetzen des Wägetrichters zentriert sich dieser selbst in dem Aufnahmering, so daß nur noch die Schnellverschlüsse geschlossen werden brauchen. Dieses Auswechseln vollzieht sich insbesondere ohne eine gewichtsmäßige Belastung der Wägeplattform, so daß auch eine entsprechende Beanspruchung der Meßvorrichtung in der Plattform-Wägezelle vermieden ist.

Nach einem Ausführungsbeispiel der Erfindung sind Spalte zwischen den L-Schenkeln an der Außenseite von Wägeplattform und Grundplatte mittels eines zugeordneten Filtertuches abgedeckt, so daß eine Ablagerung von Staub oder Pulver an der Plattform-Wägezelle verhindert ist, weil eine derartige Ablagerung aufgrund des Eigengewichts zu einer Gewichtsveränderung und somit zu einer Nullpunkt-Verschiebung im Meßwertbereich der Plattform-Wägezelle führen würde Gleichzeitig ist ein Schutz gegen Granulatkörner, die sich in den zugeordneten Spalt zwischen den L-Schenkeln klemmen könnten, gewährleistet.

Nach einem bevorzugten Ausführungsbeispiel der Erfindung ist an der Wägeplattform ein trichterförmiges Auslaufteil mit einem Auslaufstutzen auswechselbar formschlüssig gehaltert, und diese Anordnung hat den Vorteil einer Einstellung, insbesondere Reduzierung des Auslaufdurchmessers des Wägetrichters. Damit kann auch bei wechselnden Materialströmen eine genaue Verwiegung erreicht werden. Die formschlüssige Halterung des Auslaufteils an der Wägeplatte hat den Vorteil, daß eine leichte Auswechslung ohne Beanspruchung der Wägeplattform durch Schraubverbindungen oder dergleichen gegeben ist.

Zur weiteren Einstellung des Durchsatzes ist nach der Erfindung vorgesehen, daß der Auslaufstutzen in einen Reduzieransatz ragt, der ebenfalls in formschlüssiger Weise auswechselbar an einer Trägerplatte der Massestrommeßeinrichtung gehalten ist, und durch die Abmessung des Reduziereinsatzes ist ebenfalls der durch die Massestrommeßeinrichtung durchzuleitende Massestrom bestimmbar.

Dabei ist nach der Erfindung auch vorgesehen, daß der Auslaufstutzen gegen die Trägerplatte mittels einer Scheibendichtung abgedichtet ist, so daß der empfindliche Bereich der Trichterwaage mit dem Wägetrichter und der Plattform-Wägezelle gegen die anschließende Verarbeitungsmaschine abgedichtet ist.

In der Zeichnung ist ein Ausführungsbeispiel der Erfindung wiedergegeben, welches nachstrehend beschrieben ist. Es zeigen:
- Fig. 1: die Massestrommeßeinrichtung in einer Gesamtansicht.
- Fig. 2: in einer vergrößerten Darstellung den Verwiegebereich mit Wägetrichter und Plattform-Wägezelle.

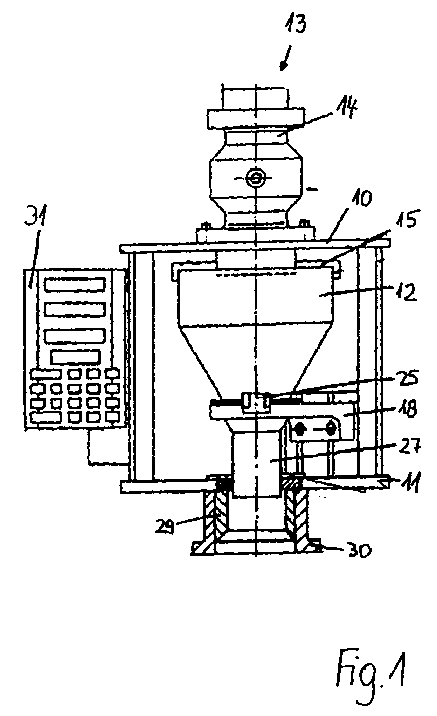

Wie sich aus Figur 1 ergibt, ist in einem Gestell 10 mit einer Trägerplatte 11 ein Wägetrichter 12 angeordnet, der über einen Materialzulauf 13 beschickt werden kann. Der Materialzulauf 13 weist eine Absperrvorrichtung 14 in Form eines Quetschventils oder eines Drehschiebers auf, so daß der Materialstrom in die Massestrommeßeinrichtung regelbar ist. Der Wägetrichter 12 ist an seiner Oberseite durch ein Filtertuch 15 abgedeckt, um einen Austritt des Materials zu vermeiden. Das Filtertuch 15 wird hier beispielsweise über den Formschluß des Trichterrandes mit einem in den äußeren Rand des Filtertuches eingenähten Gummiband gehalten.

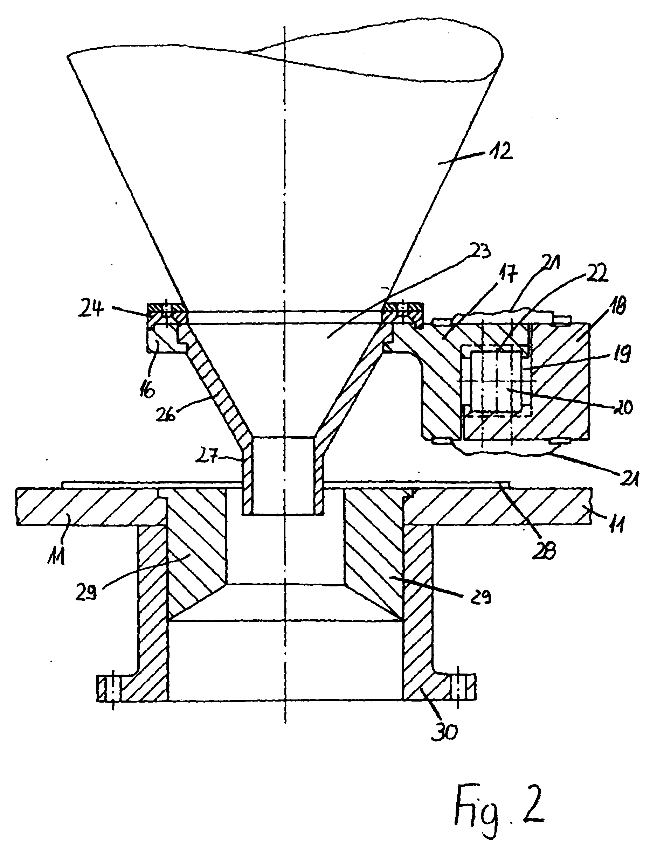

Wie sich deutlicher aus Figur 2 ergibt, steht der Wagetrichter 12 auf einer Wägeplattform 16 einer Plattform-Wägezelle üblicher Bauart auf, die exzentrisch an einer Seite des Wägetrichters 12 angeordnet einen L-förmigen Ansatz 17 aufweist: diesem Ansatz 17 zugeordnet ist eine L-förmige, fest mit dem Gestell 10 verbundene Grundplatte 18 derart, daß die zugeordneten L-Schenkel von Wägeplattform 16 und Grundplatte 18 einen Aufnahmeraum 19 für eine Plattform-Wägezelle 20 zwischen sich einschließen. Die zwischen den L-Schenkeln des Ansatzes 17 und der Grundplatte 18 verbleibenden Spalte sind an den äußeren Oberflächen der zugeordneten Teile durch ein die Spalte übergreifendes Filtertuch 21 abgedeckt, so daß der Aufnahmeraum 19 und die darin angeordnete Plattform-Wägezelle 20 vor Ablagerungen geschützt sind. Innenseitig sind an jeweils zwei gegenüberliegenden L-Schenkeln von Wägeplattform 16 und Grundplatte 18 Nuten 22 ausgebildet, welche die Plattform-Wägezelle 20 in sich aufnehmen und formschlüssig festlegen und gegen Verdrehung sichern. Wie nicht weiter dargestellt ist, beinhalten Wägeplattform 16 beziehungsweise Grundplatte 18 eine Überlastsicherung in Form eines zugeordneten Stiftes beziehungsweise einer Einstellschraube, so daß die L-Schenkel von Wägeplattform 16 und Grundplatte 18 um einen einstellbaren maximalen Betrag gegeneinander verschiebbar sind. Eine Verschiebung der Plattform-Wägezelle 20 beim Einstellen dieser Überlastsicherung wird durch die formschlüssige Festlegung in den Nuten 22 vermieden.

Zum Zentrieren des Wägetrichters 12 trägt die Wägeplattform 16 einen ihre Durchflußöffnung 23 umgebenden Aufnahmering 24, so daß beim Auswechseln des Wägetrichters 12 dieser nur in den Aufnahmering 24 eingesetzt werden muß. Wie in Figur 1 angedeutet ist, sind Schnellverschlüsse 25 vorgesehen, die an dem Aufnahmering 24 oder der Wageplattform 16 angreifen und den Wägetrichter 12 an der Wageplattform 16 halten.

An der Unterseite tragt die Wägeplattform 16 ein trichterförmiges Auslaufteil 26 mit einem Auslaufstutzen 27, das Auslaufteil 26 ist in der Durchflußöffnung 23 der Wägeplattform 16 formschlüssig gehaltert, und zwar mittels Ausbildung entsprechender Vor- und Rücksprünge. Ein Auswechseln des Auslaufteils 26, mit welchem der Materialdurchsatz durch die Massestrommeßeinrichtung einstellbar ist, ist somit erleichtert, und beim Befestigen des Auslaufteils 26 findet eine Beanspruchung der Wägeplattform nicht statt.

Der Auslaufstutzen 27 des Auslaufteils 26 ragt über eine Öffnung in der Trägerplatte 11 hinaus und stellt die Materialübergabe in ein Halsstück 30 der Massestrommeßeinrichtung sicher, wobei dieses Halsstück 30 den Materialauslauf bildet, der seinerseits über geeignete Adapter mit einer Weiterbearbeitungsmaschine verbunden ist. Zur weiteren Einstellung des Materialdurchsates ist in der Öffnung der Trägerplatte 11 formschlüssig ein Reduziereinsatz 29 eingesetzt der einerseits den Auslaufstutzen 27 des Auslaufteils 26 in sich aufnimmt und andererseits in das Halsstück 30 mündet. Der Reduziereinsatz 29 ist dabei in die Öffnung der Trägerplatte 11 ebenfalls formschlüssig durch Ausbildung entsprechender Vor- und Rücksprünge auswechselbar eingesetzt. Dabei sorgt eine auf den Stutzen 27 aufgeschobene Dichtung 28 für eine Abdichtung des Auslautbereiches gegen den Verwiegebereich wobei die auf den Stutzen 27 aufgeschobene Dichtung 28 mit ihrem Eigengewicht auf der Trägerplatte 11 auflagen und somit das Verwiegesystem mit der Gewichtskraft nicht belastet.

Die Massestrommeßeinrichtung wird vervollständigt durch ein an dem Gestell 10 angebrachtes Bedienertableau 31.

## Patentansprüche

1. Massestrommeßeinrichtung für pulverförmige und/oder granulatförmige Rohstoffe in der Form einer Trichterwaage mit einem Wägetrichter (12), einem Materialeinlauf (13) und einem Materialauslauf (26, 27), wobei der Wägetrichter (12) eine Wägezelle (20) beaufschlagt, und mit einer Einrichtung zur Bestimmung des durch den Wägetrichter (12) fließenden Massestromes durch Ermittlung der Gewichtskraft, dadurch gekennzeichnet, daß der Wägetrichter (12) mit seinem unteren Ende auf einer Wägeplattform (16) der als Plattform-Wägezelle bekannter Bauart ausgebildeten Wägezelle (20) aufsteht und die Wägeplattform (16) einen exzentrisch angeordneten L-förmigen Ansatz (17) aufweist und eine gehäusefeste Grundplatte (18) mit einem zugeordneten L-förmigen Teil versehen ist, wobei die jeweiligen L-Schenkel zur Bildung eines nahezu geschlossenen Aufnahmeraumes (19) für die Plattform-Wägezelle (20) ineinandergreifen und daß an den L-Schenkeln von Wägeplattform (16) und Grundplatte (18) innenseitig Nuten (22) zum formschlüssigen Festlegen der Wägezelle (20) ausgebildet sind.

2. Massestrommeßeinrichtung nach Anspruch 1, dadurch gekennzeichnet, daß die Wägeplattform (16) einen den Wägetrichter (12) um ihre Durchflußöffnung (23) zentrierenden Aufnahmering (24) aufweist.

3. Massestrommeßeinrichtung nach Anspruch 1 oder 2, dadurch gekennzeichnet, daß der Wägetrichter (12) mittels Schnellverschlüssen (25) an der Wägeplattform (16) beziehungsweise dem Aufnahmering (24) befestigbar ist.

4. Massestrommeßeinrichtung nach Anspruch 1, dadurch gekennzeichnet, daß die Spalte zwischen den L-Schenkeln an der Außenseite von Wägeplattform (16) und Grundplatte (18) mittels eines Filtertuches (21) abgedeckt sind.

5. Massestrommeßeinrichtung nach einem der Ansprüche 1 bis 4 dadurch gekennzeichnet, daß an der Unterseite der Wägeplattform (16) an die Durchflußöffnung (23) anschließend ein trichterförmiges Auslaufteil (26) mit einem Auslaufstutzen (27) auswechselbar formschlüssig gehaltert ist.

6. Massestrommeßeinrichtung nach einem der Ansprüche 1 bis 5, dadurch gekennzeichnet, daß der Auslaufstutzen (27) des Auslautteils (26) in einen Reduziereinsatz (29) ragt, welcher in einer Trägerplatte (11) der Massestrommeßeinrichtung formschlüssig gehaltert ist.

7. Massestrommeßeinrichtung nach einem der Ansprüche 1 bis 6, dadurch gekennzeichnet, daß der Auslaufstutzen (27) des trichterförmigen Auslaufteils (26) gegen die den Reduziereinsatz (29) haltende Trägerplatte (11) mittels einer auf den Stutzen (27) aufgeschobenen und auf der Trägerplatte (11) aufliegenden Dichtung (28) abgedichtet ist.

## Claims

1. Mass-flow measuring device for pulverulent and/or granular raw materials in the form of a hopper-type weighing machine with a weighing hopper (12), a material inlet (13) and a material outlet (26, 27), whereby the weighing hopper (12) acts upon a weighing cell (20), and with a device for determining the mass flow flowing through the weighing hopper (12) by ascertaining the weight, characterised in that the lower end of the weighing hopper (12) stands on a weighing platform (16) of the weighing cell (20) that is designed as a platform weighing cell of known type and the weighing platform (16) has an eccentrically arranged L-shaped extension (17) and a base plate (18) that is fixed with respect to the casing is provided with a corresponding L-shaped part, whereby the respective L-pieces interlock with a view to forming an almost closed receiving chamber (19) for the platform weighing cell (20), and in that grooves (22) are formed on the inside on the L-pieces of weighing platform (16) and base plate (18) with a view to positive fixing of the weighing cell (20).

2. Mass-flow measuring device according to Claim 1, characterised in that the weighing platform (16) comprises a receiving ring (24) which centres the weighing hopper (12) about its flow-through opening (23).

3. Mass-flow measuring device according to claim 1 or 2, characterised in that the weighing hopper (12) is capable of being attached to the weighing platform (16) or the receiving ring (24) by means of quick-acting fasteners (25).

4. Mass-flow measuring device according to Claim 1, characterised in that the gaps between the L-pieces on the outside of weighing platform (16) and base plate (18) are covered by means of a filter cloth (21).

5. Mass-flow measuring device according to one of Claims 1 to 4, characterised in that on the underside of the weighing platform (16) adjoining the flow-through opening (23) a hopper-shaped outlet part (26) with an outlet tube (27) is retained in positive manner so as to be exchangeable.

6. Mass-flow measuring device according to one of Claims 1 to 5, characterised in that the outlet tube (27) of the outlet part (26) projects into a reducing insert (29) which is retained in positive manner in a carrier plate (11) of the mass-flow measuring device.

7. Mass-flow measuring device according to one of Claims 1 to 6, characterised in that the outlet tube (27) of the hopper-shaped outlet part (26) is sealed in relation to the carrier plate (11) holding the reducing insert (29) by means of a seal (28) that is pushed onto the tube (27) and that rests on the carrier plate (11).

## Revendications

1. Débitmètre massique pour des matières en poudre et/ou en granulé, se présentant sous la forme d'une balance-trémie avec une trémie de pesage (12), une arrivée de matériau (13) et une sortie de matériau (26, 27), la trémie de pesage (12) sollicitant une cellule de pesage (20), et un appareil pour déterminer le courant massique circulant à travers la trémie de pesage (12) par la détermination du poids, caractérisé an ce que la trémie de pesage (12) repose par son extrémité inférieure sur une plate-forme de pesage (16) de la cellule de pesage (20), conçue comme une cellule de pesage à plate-forme de type connu, et la plate-forme de pesage (16) présente une embase (17) excentrée an forme de L et une plaque d'assise (18) solidaire du carter est munie d'une plaque associée en forme de L, dont les ailes respectives s'interpénètrent pour former un espace de logement (19) pratiquement fermé pour la cellule de pesage à plate-forme, et en ce que, sur les branches du L de la plate-forme de pesage (16) et de la plaque d'assise (18), des rainures (22) sont formées sur la face interne pour fixer mécaniquement la cellule de pesage (20).

2. Débitmètre massique selon la revendication 1, caractérisé en ce que la plate-forme de pesage (16) comporte une bague réceptrice (24) qui centre la trémie de pesage (12) dans son ouverture de passage (23).

3. Débitmètre massique selon la revendication 1 ou 2, caractérisé an ce que la trémie de pesage (12) peut être fixée au moyen de dispositifs de fermeture rapide (25) sur la plate-forme de pesage (16) ou la bague réceptrice (24).

4. Débitmètre massique selon la revendication 1, caractérisé en ce que les fentes entre les branches du L sont recouvertes d'un tissu filtrant (21) sur la face externe de la plate-forme de pesage (16) et de la plaque d'assise (18).

5. Débitmètre massique selon l'une quelconque des revendications 1 à 4, caractérisé an ce qu'une partie de sortie (26) en forme d'entonnoir avec une tubulure de sortie (27) est logée mécaniquement et de façon amovible sur le dessous de la plate-forme de pesage (16) à la suite de l'ouverture de passage (23).

6. Débitmètre massique selon l'une quelconque des revendications 1 à 5, caractérisé en ce que la tubulure de sortie (27) de la partie de sortie (26) déborde dans un insert réducteur (29) qui est logé mécaniquement dans une plaque support (11) de l'appareil de mesure du courant de masse.

7. Débitmètre massique selon l'une quelconque des revendications 1 à 7, caractérisé en ce que la tubulure de sortie (27) de la partie de sortie (26) en forme d'entonnoir est rendu étanche par rapport à la plaque support (11) tenant l'insert réducteur (29) au moyen d'un joint (28) enfilé sur la tubulure (27) et reposant sur la plaque support (11).
